(19) **Europäisches Patentamt / European Patent Office / Office européen des brevets**

(11) **EP 2 525 479 B1**

(12) **EUROPEAN PATENT SPECIFICATION**

(45) Date of publication and mention
of the grant of the patent:
**02.10.2019 Bulletin 2019/40**

(51) Int Cl.:
$H02K\ 29/03^{(2006.01)}$ $H02K\ 1/27^{(2006.01)}$

(21) Application number: **11166592.3**

(22) Date of filing: **18.05.2011**

(54) **A synchronous permanent magnet machine**

Permanentmagneterregte Synchronmaschine

Machine à aimant permanent synchrone

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.11.2012 Bulletin 2012/47**

(73) Proprietor: **Siemens Gamesa Renewable Energy A/S**
**7330 Brande (DK)**

(72) Inventors:
• **Chen, Jin-tao**
**Sheffield, S11 8BW (GB)**

• **Zhu, Zi-Qiang**
**Sheffield, S11 9RS (GB)**

(74) Representative: **Aspacher, Karl-Georg et al**
**Siemens Aktiengesellschaft**
**Postfach 22 16 34**
**80506 München (DE)**

(56) References cited:
**EP-A1- 1 619 780** **EP-A2- 2 209 182**
**WO-A1-2010/109056** **WO-A2-01/76039**

**Description**

The present invention relates to a synchronous permanent magnet machine.

More particularly the present invention relates to a synchronous permanent magnet machine including a permanent magnet arrangement for producing a magnetic field having a flux density distribution that is approximately sinusoidal, the permanent magnet arrangement including a permanent magnet pole having a base, top face, and opposing sides, the top face comprising a central region midway between the opposing sides, and curved side regions to either side of the central region which meet the central region.

One such permanent magnet arrangement is disclosed in the following publication: IEEE Transactions on Magnetics, Vol. 39, No. 6, November 2003, pages 3523 to 3526, Optimum Design of Magnet Shape in Permanent-Magnet Synchronous Motors, L.Yong, Z.Jibin, and L.Yongping.

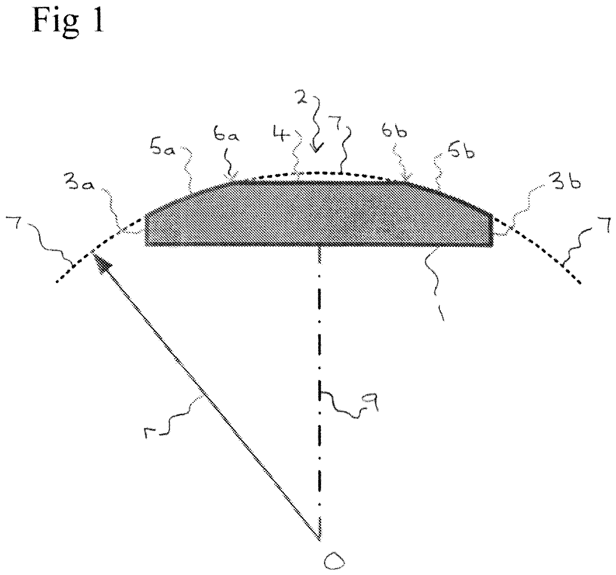

The form of the permanent magnet pole used in this permanent magnet arrangement is shown in Fig 1 of the accompanying drawings.

Fig 1 shows a permanent magnet pole having a flat base 1, top face 2, and parallel opposing sides 3a, 3b. The top face 2 comprises a flat central region 4 midway between the opposing sides 3a, 3b, and curved side regions 5a, 5b to either side of the flat central region 4. The curved side regions 5a, 5b meet the flat central region 4 at positions 6a, 6b. Each curved side region 5a, 5b comprises an arc of a circle 7 of centre 'O' and radius 'r'. The centre O lies on a straight line 9 which (i) intersects base 1 and central region 4 of top face 2 at right angles, and (ii) lies midway between opposing sides 3a, 3b.

The permanent magnet pole of Fig 1 has the disadvantage that it produces appreciable torque ripple in a synchronous permanent magnet machine.

From EP 2 209 182 A2, a permanent magnet rotor including a plurality of permanent magnets is known. The permanent magnets each comprise an outside periphery comprising a first curved arc in the center of the periphery and a second curved arc and a third curved arc to the sides of the periphery, wherein the radius of curvature of the first curved arc differs from the radii of the second and third curved arcs.

In WO 2010/109056 A1, a permanent magnet for an electric machine is disclosed. The permanent magnet is of an even thickness in the middle and becomes thinner towards the edges by comprising bevelled edge parts.

WO 01/76039 A2 describes a pole for use in a magnetic circuit that includes a shaft for passing magnetic flux and a cap. The shaft has a face through which at least some of the magnetic flux passes and to which the cap is fixed, wherein the cap is made of a permeable material and is formed to impede eddy currents in the cap.

From EP 1619780 A1, magnetic poles for electric machines are known that comprise a gap-side surface with an external shape represented by a hyperbolic function or a reciprocal cosine function to reduce a cogging torque of an electric machine.

According to the present invention there is provided a synchronous permanent magnet machine according to claim 1.

The invention will now be described, by way of example, with reference to the accompanying drawings, in which:

Fig 1, already referred to, shows a known permanent magnet pole for use in a synchronous permanent magnet machine;

Fig 2 shows a first permanent magnet pole for use in a synchronous permanent magnet machine;

Figs 3 shows a second permanent magnet poles in accordance with the present invention for use in a synchronous permanent magnet machine;

Figs 4 and 5 show respectively first and second synchronous permanent magnet machines in which the permanent magnet poles of Figs 2 and 3 might be used; and

Figs 6 and 7 show respectively third and fourth permanent magnet poles for use in a synchronous permanent magnet machine.

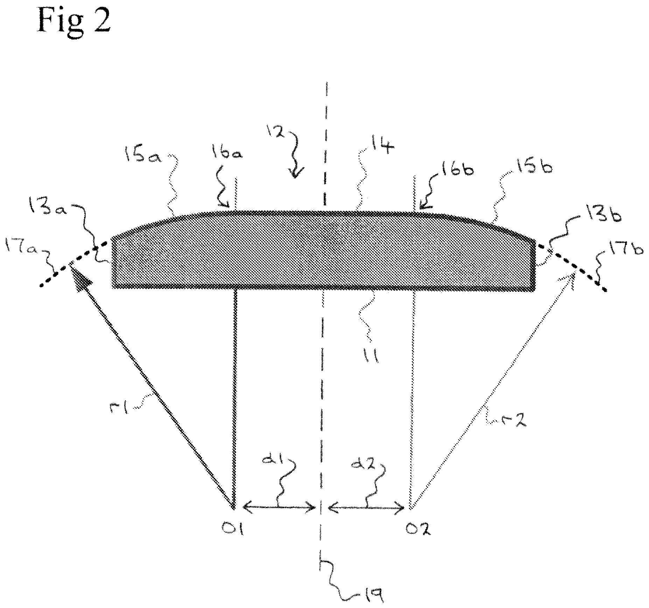

Fig 2 shows a permanent magnet pole having a flat base 11, top face 12, and parallel opposing sides 13a, 13b. The top face 12 comprises a flat central region 14 midway between the opposing sides 13a, 13b, and curved side regions 15a, 15b to either side of the flat central region 14. The curved side regions 15a, 15b meet the flat central region 14 at positions 16a, 16b.

The curved side region 15a comprises an arc of a circle 17a of centre 'O1' and radius 'r1'. The centre 01 is offset by a distance 'd1' to one side of a straight line 19 which (i) intersects base 11 and central region 14 of top face 12 at right angles, and (ii) lies midway between opposing sides 13a, 13b. The distance d1 equals the distance along central region 14 between straight line 19 and the position 16a where central region 14 meets curved side region 15a. The distance between the centre O1 and position 16a equals the radius r1. The curved side region 15b comprises an arc of a circle 17b of centre 'O2' and radius 'r2' equalling r1. The centre O2 is offset by a distance 'd2' to the other side of straight line 19 to centre O1 of circle 17a. Distance d2 equals distance d1 and is the distance along central region 14 between straight line 19 and the position 16b where central region 14 meets curved side region 15b. Similarly to centre 01, the distance between centre O2 and position 16b equals the radius r2.

It can be seen that at positions 16a, 16b where the curved side regions 15a, 15b meet the central region 14 the inclination or gradient of the top face 12 is continuous, i.e. at positions 16a, 16b there is no discontinuity in the inclination or gradient of top face 12. In other words, top face 12 transitions smoothly between curved side regions 15a, 15b and central region 14, without abrupt change in its inclination or gradient. Flat central region 14 is tangential to curved side regions 15a, 15b at positions 16a, 16b.

The continuous relationship between curved side regions 15a, 15b and central region 14 of the permanent magnet pole of Fig 2 is to be contrasted to the discontinuous relationship between curved side regions 5a, 5b and central region 4 of the known permanent magnet pole of Fig 1. In the permanent magnet pole of Fig 1, at positions 6a, 6b where curved side regions 5a, 5b meet central region 4, there is discontinuity in the inclination or gradient of top face 2 of the permanent magnet pole. The continuous relationship of the permanent magnet pole of Fig 1 has the advantage that it significantly reduces torque ripple in a synchronous permanent magnet machine, as will now be explained.

In a synchronous permanent magnet machine, torque ripple arises due to unwanted harmonics present in the flux density distribution of the magnetic field produced by the permanent magnet arrangement of the synchronous permanent magnet machine. These unwanted harmonics are present due to the flux density distribution of the magnetic field not being precisely sinusoidal. The further the flux density distribution from a precise sinusoid the greater the unwanted harmonics. The permanent magnet pole of Fig 2, by removing the discontinuity present in the permanent magnet pole of Fig 1 at positions 6a, 6b, produces a flux density distribution that is much closer to a sinusoid, thereby significantly reducing the unwanted harmonics.

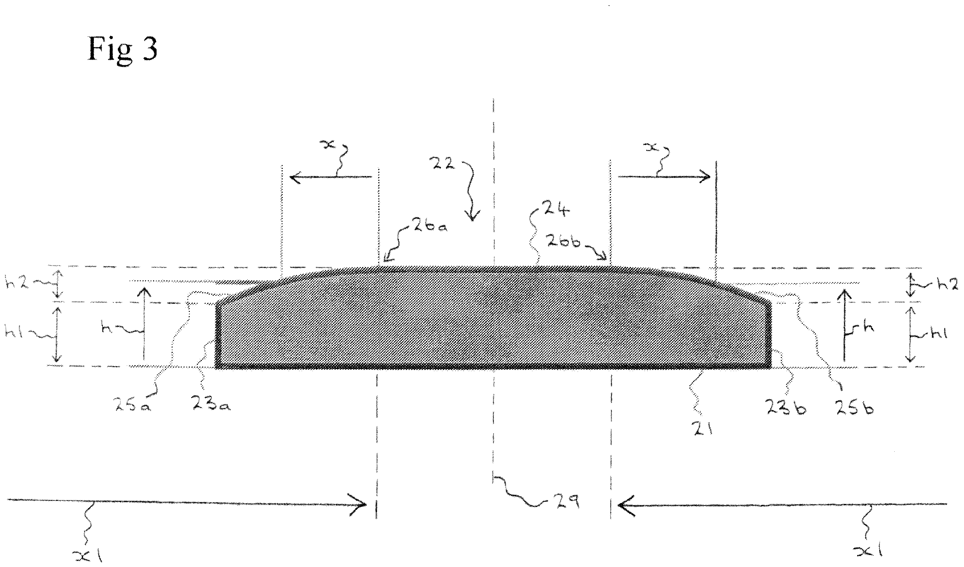

Fig 3 shows a permanent magnet pole having a flat base 21, top face 22, and parallel opposing sides 23a, 23b. The top face 22 comprises a flat central region 24 midway between the opposing sides 23a, 23b, and curved side regions 25a, 25b to either side of the flat central region 24. The curved side regions 25a, 25b meet the flat central region 24 at positions 26a, 26b. The permanent magnet pole of Fig 3 is symmetric with respect to a straight line 29 which (i) intersects base 21 and central region 24 of top face 22 at right angles, and (ii) lies midway between opposing sides 23a, 23b.

Each curved side region 25a, 25b is sinusoidal in form and may be represented by the equation:

$$h = h1 + h2.\cos((x/x1)\pi) \qquad (1),$$

where h is the vertical height of positions on the curved side region 25a, 25b above the flat base 21, h1 is the vertical height of the opposing sides 23a, 23b, h2 is the vertical height of the curved side regions 25a, 25b, x is the horizontal distance of positions on the curved side region 25a, 25b from the position 26a, 26b where the curved side region 25a, 25b meets the central region 24, and x1 is the horizontal distance between adjacent positions 26a, 26b of adjacent permanent magnet poles, as the permanent magnet pole of Fig 3, when in place in a synchronous permanent magnet machine (more on this below).

It can be seen that positions 26a, 26b where the curved side regions 25a, 25b meet the central region 24, correspond to the peaks of the sinusoidal form of the curved side regions. Thus, at positions 26a, 26b the inclination or gradient of the top face 22 is continuous, i.e. at positions 26a, 26b there is no discontinuity in the inclination or gradient of top face 22. In other words, top face 22 transitions smoothly between curved side regions 25a, 25b and central region 24, without abrupt change in its inclination or gradient. Flat central region 24 is tangential to curved side regions 25a, 25b at positions 26a, 26b.

For the same reasons as given above in respect of the permanent magnet pole of Fig 2, in the permanent magnet pole of Fig 3 the continuous relationship between curved side regions 25a, 25b and central region 24 significantly reduces torque ripple in a synchronous permanent magnet machine.

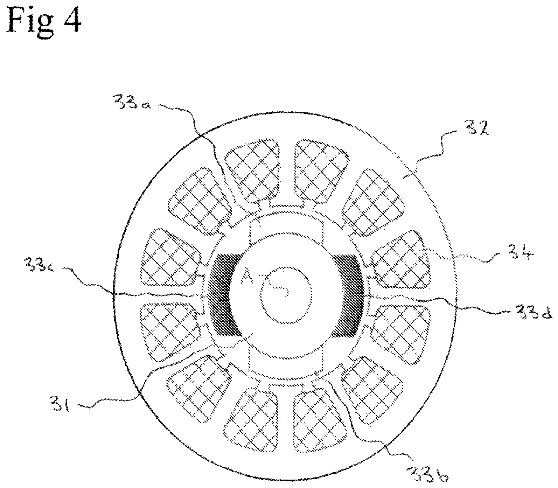

The first synchronous permanent magnet machine of Fig 4 is of the rotary type and comprises a rotor 31 and a stator 32. On the rotor is mounted a permanent magnet arrangement comprising two oppositely disposed poles 33a, 33b of positive polarity, and two oppositely disposed poles 33c, 33d of negative polarity. The poles 33a, 33b, 33c, 33d would be as the poles of Figs 2 and 3. The poles 33a, 33b and the poles 33c, 33d are disposed at 90 degrees relative to one another about the axis of rotation A of the rotor (which is into and out of the paper in Fig 4). On the stator are mounted windings 34 (the conductors of the windings run into and out of the paper in Fig 4). In operation of the synchronous permanent magnet machine, the rotor 31 rotates within the stator 32.

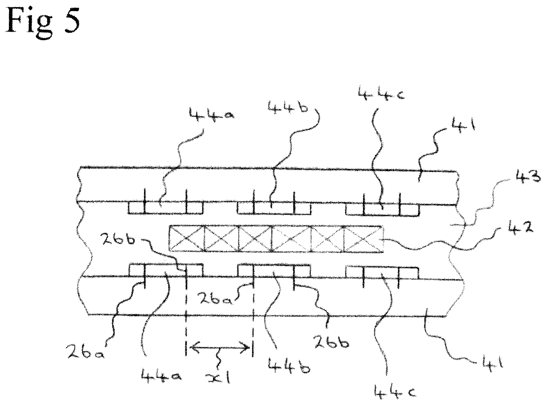

The second synchronous permanent magnet machine of Fig 5 is of the linear type and comprises parallel elongate mountings 41, windings 42 disposed midway between the mountings in the channel 43 between the mountings, and, mounted on each of the mountings between the mounting and the windings, a permanent magnet arrangement comprising a linear array of poles 44a, 44b, 44c, with adjacent poles being of opposite polarity. The poles 44a, 44b, 44c would be as the poles of Figs 2 and 3. The conductors of the windings extend into and out of the paper in Fig 5. In operation of the synchronous permanent magnet machine, there is relative movement horizontally in Fig 5 between the mountings 41 (together with their poles 44a, 44b, 44c) and the windings 42.

Fig 5 shows in respect of each pole 44a, 44b, 44c the positions 26a, 26b of Fig 3. In respect of a pair of adjacent poles 44a, 44b, Fig 5 shows the distance x1 of Fig 3. The distance x1 is the horizontal distance between position 26b of pole 44a and adjacent position 26a of adjacent pole 44b. Note, in the first synchronous permanent magnet machine of Fig 4, the distance x1 would be circumferentially around the rotor between circumferentially adjacent poles.

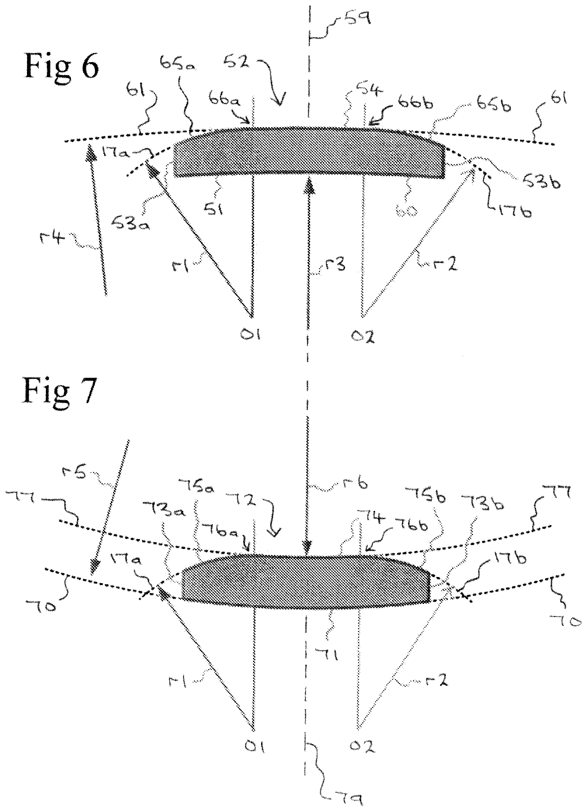

Fig 6 shows a permanent magnet pole that is the same as the permanent magnet pole of Fig 2 except (i) the base 51 of the pole is no longer flat but comprises an arc of a circle 60 of radius r3, and (ii) the central region 54 of the top face 52 of the pole also is no longer flat but comprises an arc of a circle 61 of radius r4. The centres (not shown) of both circles 60, 61 lie on a straight line 59 which (i) intersects base 51 and central region 54 of top face 52 at right angles, and (ii) lies midway between opposing sides 53a, 53b.

The circle 17a of centre O1 and radius r1 abuts the circle 61 at position 66a where curved side region 65a meets central region 54. Thus, at position 66a, circles 17a and 61 share a common tangent. Similarly, the circle 17b of centre O2 and radius r2 abuts the circle 61 at position 66b where curved side region 65b meets central region 54, so that at position 66b circles 17b and 61 also share a common tangent.

By virtue of these common tangents, the inclination or gradient of the top face 52 is continuous at positions 66a, 66b where curved side regions 65a, 65b meet central region 54, i.e. at positions 66a, 66b there is no discontinuity in the inclination or gradient of top face 52. The continuous relationship between curved side regions 65a, 65b and central region 54 significantly reduces torque ripple in a synchronous permanent magnet machine.

The permanent magnet pole of Fig 6 is suitable for mounting on an internal rotor, i.e. base 51 of the pole would be mounted on the internal rotor.

A variation of the permanent magnet pole of Fig 6 would be for base 51 to be flat.

Fig 7 shows a permanent magnet pole that is the same as the permanent magnet pole of Fig 2 except (i) the base 71 of the pole is no longer flat but comprises an arc of a circle 70 of radius r5, and (ii) the central region 74 of the top face 72 of the pole also is no longer flat but comprises an arc of a circle 77 of radius r6. The centres (not shown) of both circles 70, 77 lie on a straight line 79 which (i) intersects base 71 and central region 74 of top face 72 at right angles, and (ii) lies midway between opposing sides 73a, 73b.

The circle 17a of centre O1 and radius r1 abuts the circle 77 at position 76a where curved side region 75a meets central region 74. Thus, at position 76a, circles 17a and 77 share a common tangent. Similarly, the circle 17b of centre O2 and radius r2 abuts the circle 77 at position 76b where curved side region 75b meets central region 74, so that at position 76b circles 17b and 77 also share a common tangent.

By virtue of these common tangents, the inclination or gradient of the top face 72 is continuous at positions 76a, 76b where curved side regions 75a, 75b meet central region 74, i.e. at positions 76a, 76b there is no discontinuity in the inclination or gradient of top face 72. The continuous relationship between curved side regions 75a, 75b and central region 74 significantly reduces torque ripple in a synchronous permanent magnet machine.

The permanent magnet pole of Fig 7 is suitable for mounting on an external rotor, i.e. base 71 of the pole would be mounted on the external rotor.

A variation of the permanent magnet pole of Fig 7 would be for base 71 to be flat.

It is to be noted that the flux density distribution of the magnetic field produced by the permanent magnet poles of Figs 2, 3, 6 and 7 intentionally has a significant third harmonic component. This is because the effect of the third harmonic component is to increase torque, and it is possible to have present the third harmonic component without increasing torque ripple.

## Claims

1. A synchronous permanent magnet machine including a permanent magnet arrangement for producing a magnetic field having a flux density distribution that is approximately sinusoidal, the permanent magnet arrangement including a permanent magnet pole having a flat base (21), top face (22), and parallel opposing sides (23a, 23b), wherein the top face (22) comprises a flat central region (24) midway between the opposing sides (23a, 23b), **characterized in that** the permanent magnet pole has curved side regions (25a, 25b) to either side of the flat central region (24) which meet the central region (24), wherein where (26a, 26b) the curved side regions (25a, 25b) meet the flat central region (24) the inclination of the top face (22) is continuous, wherein each curved side region (25a, 25b) is sinusoidal in form.

2. A synchronous permanent magnet machine according to claim 1 wherein each curved side region (25a, 25b) is represented by the equation:

$$h = h1 + h2.\cos((x/x1)\pi) \qquad (1),$$

where h is the vertical height of positions on the curved side region (25a, 25b), h1 is the vertical height of the opposing sides (23a, 23b), h2 is the vertical height of the curved side regions (25a, 25b), x is the horizontal distance of positions on the curved side region (25a, 25b) from a position (26a, 26b) where the curved side region (25a, 25b) meets the central region (24), and x1 is a constant which relates to the distance between adjacent permanent magnet poles in the synchronous permanent magnet machine.

3. A synchronous permanent magnet machine according to claim 2 wherein the base (21) and central region (24) are flat, and the positions (26a, 26b) where the curved side regions (25a, 25b) meet the central region (24) correspond to the peaks (26a, 26b) of the sinusoidal form of the curved side regions (25a, 25b).

**Patentansprüche**

1. Permanentmagneterregte Synchronmaschine, welche eine Permanentmagnetanordnung zum Erzeugen eines Magnetfeldes mit einer Flussdichteverteilung, welche annähernd sinusförmig ist, aufweist, wobei die Permanentmagnetanordnung einen Permanentmagnetpol mit einer ebenen Grundfläche (21), einer Oberseite (22) und parallelen gegenüberliegenden Seiten (23a, 23b) aufweist, wobei die Oberseite (22) einen ebenen zentralen Bereich (24) in der Mitte zwischen den gegenüberliegenden Seiten (23a, 23b) umfasst,
**dadurch gekennzeichnet, dass** der Permanentmagnetpol gekrümmte Seitenbereiche (25a, 25b) beiderseits des ebenen zentralen Bereichs (24) aufweist, welche an den zentralen Bereich (24) angrenzen, wobei dort, wo (26a, 26b) die gekrümmten Seitenbereiche (25a, 25b) an den ebenen zentralen Bereich (24) angrenzen, die Neigung der Oberseite (22) stetig ist, wobei jeder gekrümmte Seitenbereich (25a, 25b) eine sinusförmige Gestalt hat.

2. Permanentmagneterregte Synchronmaschine nach Anspruch 1, wobei jeder gekrümmte Seitenbereich (25a, 25b) durch die Gleichung

$$h = h1 + h2.\cos((x/x1)\pi) \qquad (1)$$

beschrieben wird, wobei h die vertikale Höhe von Positionen auf dem gekrümmten Seitenbereich (25a, 25b) ist, h1 die vertikale Höhe der gegenüberliegenden Seiten (23a, 23b) ist, h2 die vertikale Höhe der gekrümmten Seitenbereiche (25a, 25b) ist, x der horizontale Abstand von Positionen auf dem gekrümmten Seitenbereich (25a, 25b) von einer Position (26a, 26b) ist, wo der gekrümmte Seitenbereich (25a, 25b) an den zentralen Bereich (24) angrenzt, und x1 eine Konstante ist, welche mit dem Abstand zwischen benachbarten Permanentmagnetpolen in der permanentmagneterregten Synchronmaschine zusammenhängt.

3. Permanentmagneterregte Synchronmaschine nach Anspruch 2, wobei die Grundfläche (21) und der zentrale Bereich (24) eben sind und die Positionen (26a, 26b), wo die gekrümmten Seitenbereiche (25a, 25b) an den zentralen Bereich (24) angrenzen, den höchsten Punkten (26a, 26b) der sinusförmigen Gestalt der gekrümmten Seitenbereiche (25a, 25b) entsprechen.

**Revendications**

1. Machine à aimants permanents synchrones incluant un agencement d'aimants permanents pour produire un champ magnétique ayant une distribution de densité de flux qui est approximativement sinusoïdale, l'agencement d'aimants permanents incluant un pôle d'aimant permanent ayant une base plate (21), une face de dessus (22), et des côtés opposés parallèles (23a, 23b), dans laquelle la face de dessus (22) comprend une région centrale plate (24) à mi-chemin entre les côtés opposés (23a, 23b), **caractérisée en ce que** le pôle d'aimant permanent a des régions latérales incurvées (25a, 25b) sur chaque côté de la région centrale plate (24) qui rencontrent la région centrale (24), dans laquelle là où (26a, 26b) les régions latérales incurvées (25a, 25b) rencontrent la région centrale plate (24), l'inclinaison de la face de dessus (22) est continue, dans laquelle chaque région latérale incurvée (25a, 25b) est de forme sinusoïdale.

**2.** Machine à aimants permanents synchrones selon la revendication 1 dans laquelle chaque région latérale incurvée (25a, 25b) est représentée par l'équation :

$$h = h1 + h2.\cos((x/x1)\pi) \qquad (1),$$

où h est la hauteur verticale de positions sur la région latérale incurvée (25a, 25b), h1 est la hauteur verticale des côtés opposés (23a, 23b), h2 est la hauteur verticale des régions latérales incurvées (25a, 25b), x est la distance horizontale de positions sur la région latérale incurvée (25a, 25b) à partir d'une position (26a, 26b) où la région latérale incurvée (25a, 25b) rencontre la région centrale (24), et x1 est une constante qui concerne la distance entre des pôles d'aimants permanents adjacents dans la machine à aimants permanents synchrones.

**3.** Machine à aimants permanents synchrones selon la revendication 2 dans laquelle la base (21) et la région centrale (24) sont plates, et les positions (26a, 26b) où les régions latérales incurvées (25a, 25b) rencontrent la région centrale (24) correspondent aux pics (26a, 26b) de la forme sinusoïdale des régions latérales incurvées (25a, 25b) .

Fig 1

# Fig 2

Fig 3

## Fig 4

# Fig 5

# Fig 6

# Fig 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2209182 A2
- WO 2010109056 A1
- WO 0176039 A2
- EP 1619780 A1

**Non-patent literature cited in the description**

- **L.YONG ; Z.JIBIN ; L.YONGPING.** Optimum Design of Magnet Shape in Permanent-Magnet Synchronous Motors. *IEEE Transactions on Magnetics,* November 2003, vol. 39 (6), 3523-3526